# EUROPEAN PATENT APPLICATION

(11) **EP 4 468 595 A1**
(43) Date of publication of application: **27.11.2024**
(21) Application number: 23174873.2
(22) Date of filing: 23.05.2023
(51) Int. Cl.: H02S 30/20, F24S 20/50

(54) **A FRAME SYSTEM FOR SOLAR PANELS AND A METHOD FOR FOLDING AND UNFOLDING A FRAME SYSTEM**

(71) Applicant: AK-Sunpower ApS, 8800 Viborg (DK)
(72) Inventor: Kriegbaum, Carsten, 8800 Viborg (DK); Andersen, Thomas, 9500 Hobro (DK); Højgaard, Thomas, 9500 Hobro (DK)
(74) Representative: Patrade A/S

(57) **Abstract**

The present invention relates to a frame system (100) for solar panels (200), said frame system comprising a base frame (300), said base frame comprising at least four base bars (310), such as rods or beams, at least two movable base joints (320), such as hinges, at least two support frames (400), said support frames comprising: two end sections (410), at least two frame protrusions (420), said two protrusions being positioned respectively at the two end sections,
wherein the frame system (100) can take at least two positions:
- a stacked position (SP) for transporting the system, wherein the support frames are stacked on top of each other on a folded base frame,
- an unfolded position (UP) for operation of the system, wherein the support frames are positioned beside each other on an unfolded base frame.

Furthermore, the present invention relates to a method for unfolding a frame system for solar panels, and a method for folding a frame system.

## Description

### FIELD OF THE INVENTION

The present invention relates to a frame system for solar panels, said frame system comprising a base frame, said base frame comprising at least four base bars, such as rods or beams, at least two movable base joints, such as hinges, at least two support frames, said support frames comprising: two end sections, at least two frame protrusions, said two protrusions being positioned respectively at the two end sections,
wherein the frame system can take at least two positions:
- a stacked position for transporting the system, wherein the support frames are stacked on top each other on a folded base frame,
- an unfolded position for operation of the system, wherein the support frames are positioned beside each other on an unfolded base frame.

Furthermore, the present invention relates to a method for unfolding a frame system for solar panels, and a method for folding a frame system.

### BACKGROUND OF THE INVENTION

The world calls for sustainable and green solutions for providing a positive impact on the environment or least not providing a negative impact on the environment.
The construction industry is one of the most pollutive industries, and therefore solutions for making this industry move towards being a more environmentally friendly industry are highly requested.

Today, numerous solutions of exploitation of green energy are available, however, there is a huge challenge and thereby a disadvantage of utilizing green energy, namely the mobility of the systems for providing green energy.

Within the area of green energy, solar energy is probably one of the most preferred and utilized solutions. This also applies for utilizing green energy within the construction industry.

However, especially within the construction industry, the mobility of the energy systems is extremely important, since the construction sites are only temporary, and the need for energy is only relevant while building the constructions. When the building process is finished, the construction site moves, and the green energy solution provided for delivering energy during the building process is then not needed anymore - it must be relocated. Such movement and transportation of energy systems, such as solar energy systems, is today enormously inconvenient and troublesome, and craftsmen are spending hours, often days, on setting up and taking down solar energy systems on the construction sites.

Hence, an improved green energy solution, preferably an efficient and reliable solution, would be advantageous, and in particular a more mobile, easy to handle, transport friendly, economical, sustainable solar energy solution would be advantageous.

### OBJECT OF THE INVENTION

It is an object of the present invention to provide an alternative to the prior art.

In particular, it may be seen as an object of the present invention to provide a frame system for solar panels and a method for handling a frame system for solar panels that solves the above-mentioned problems by being at least mobile, easy to handle, transport friendly, economical and sustainable.

### DESCRIPTION OF THE INVENTION

Thus, the above-described object and several other objects are intended to be obtained in a first aspect of the invention by providing a frame system for solar panels, said frame system comprising:
- a base frame, said base frame comprising:
   - at least four base bars, such as rods or beams,
   - at least two movable base joints, such as hinges,
- at least two support frames, said support frames comprising:
   - two end sections,
   - at least two frame protrusions, said two protrusions being positioned respectively at the two end sections,
wherein the frame system can take at least two positions:
- a stacked position for transporting the system, wherein the support frames are stacked on top of each other on a folded base frame,
- an unfolded position for operation of the system, wherein the support frames are positioned beside each other on an unfolded base frame.

The invention is particularly, but not exclusively, advantageous for providing a mobile and easily movable / transportable solar energy system.

The system might preferably be seen as a plug-and-play solution.

The system may be used as both an on and/or off grid solution and/or a stand-alone solution. The system is thereby providing a solution potentially replacing the known and now used polluting diesel/gasoline engines when generating, producing and supplying energy.

A system with a base being foldable such that the base can act as a transportation frame and a mounting frame is provided in the invention. This double function provides several advantages.
When the base frame acts as a transportation frame, it is folded such that support frames for solar panels can be stacked upon the base frame. This makes the entire system easy to transport from one construction site to another.
Preferably, though not necessarily, the base frame in a folded position with stacked support frames upon it is fitting into a container.

The base frame and the system in an unfolded position is suitable for being positioned and installed at any desired location. It might be installed on the top of site accommodation / construction trailers, on a building, on the ground, etc.
It is suitable for being installed easily anywhere that might be preferred or required on the specific construction site, or at any other suitable location/position.

It should be understood that the position/location of the frame system should not be seen as limiting to the invention.

It should moreover be understood that the frame system of the invention might be able to take other positions than the fully folded/stacked position or the fully unfolded position. Obviously, there are many potential positions between the unfolded and the stacked position, as illustrated in the figures.

It should further be understood that the within the stacked position, the base frame is in a folded position and the support frame is stacked upon the folded base frame. This position is suitable for transportation.

It should additionally be understood that the within the unfolded position, the base frame is in an unfolded position and the support frame is non-stacked and preferably apportioned upon and along the unfolded base frame.
This position is suitable for operation.

The frame system provides easy relocation of a green energy producing/providing system, making the frame system specifically advantages for installation on temporary locations, such as construction sites.

However, it should be understood, that the frame system of the invention might be installed at any desired location, not only at construction sites.

The support frames of the system are particularly, but not exclusively, advantageous for providing frames being suitable for mounting solar panels and for providing frames that is stackable and further self-supporting / self-carrying.
In one embodiment of the invention, the system comprises:
- at least six base bars,
- at least four moving joints, and
- at least four support frames.

The embodiment is particularly, but not exclusively, advantageous for providing a system allowing a greater number of solar panels and thereby for providing a greater amount of green energy.
It should be understood that the number of support frames stacked on the base in principle is infinite, however, four support frames is a preferred number, since four support frames fits a preferred embodiment of the base frame having main six bars. The base frame might further comprise support bars.
The six main bars of the base in an unfolded position are suitable for positioning of four support frames above.

In one embodiment of the invention, the protrusions of the support frames are a receiving portion for receiving:
- an above or a below positioned support frame when being in a stacked positioned, and/or
- the base frame when being in an unfolded position.

The embodiment is particularly, but not exclusively, advantageous for providing a system that is safe and stable/reliable in both a stacked position and in an unfolded position.
Furthermore, this makes it easy to stack the support frames in a safe and stable stack and position the support frames on the unfolded base frame in a safe and stable condition.

In one embodiment of the invention, the receiving portion is two protrusions positioned opposite each other, wherein the distance between the two protrusions corresponds substantially to the width of the base frame and/or the support frames.

The embodiment is particularly, but not exclusively, advantageous for providing a system wherein the different elements of the system fit perfectly to each other, thereby providing an easy handling and manageable system.

In one embodiment of the invention, the end sections of the support frames have a substantially triangular or a substantially quadrilateral cross-section, preferably the end cross-section is symmetrical around a center line.

The embodiment is particularly, but not exclusively, advantageous for providing a frame system being stackable.

It should be understood that the cross-section of the support frames might take any desired form/shape, though substantially triangular or substantially quadrilateral cross-sections are preferred.

In one embodiment of the invention, the two end sections of the support frame have a substantially triangular cross-section, and wherein the at least two end section protrusions are a receiving portion positioned downwards from the lowermost section of the end section,
wherein said downward receiving portion is suitable for:
- receiving the below positioned support frame when being in a stacked position, and/or
- receiving the base frame bar when being in an unfolded position.

In one embodiment of the invention, the two support frame end sections comprise an insert portion suitable for being received by a receiving portion of the above positioned support frame when being in a stacked position.

In one embodiment of the invention, the two support frame end sections have a substantially quadrilateral cross-section, and wherein the at least two end section protrusions are a receiving portion positioned upwards from the uppermost section of the end section for receiving the above positioned support frame when being stacked.

In one embodiment of the invention, the support frames comprise at least one lifting portion, preferably each support frame comprises two lifting portions, more preferably the two lifting portions are positioned substantially at the two ends of the support frame.

The embodiments are particularly, but not exclusively, advantageous for providing a system that is easy to move from one position to another, such as moving the system from the ground or from the top of construction trailers to the transportation vehicle, such as a truck.
This allows easy relocation of the system.

In one embodiment of the invention, the lifting portion comprises:
- a protrusion from the top of the support frame, preferably a lifting eye, and/or
- an integrated portion of the upper part of the support frame, such as a gap or hole.

The embodiment is particularly, but not exclusively, advantageous for providing a system that is suitable for being lifted, preferably by a crane.

It should be understood that the frame system might be moved/positioned by other means, such a using a forklift.

In one embodiment of the invention, each support frame comprises locking means, preferably at least four locking means, preferably splits and/or bolts and/or springs and/or gripping means.

The embodiment is particularly, but not exclusively, advantageous for providing a system that is transformable between at least to positions, and wherein the system is safe and reliable in both positions.
When being in a stacked position, the locking means provide a self-carrying system.

When being in an unfolded position, the locking means provide a manageable and easy mounting function and provides a stable energy providing system when in use.

In one embodiment of the invention, the support frame positioned the lowermost in a stacked position is fixed to the base frame, preferably locked to the base frame, and preferably by at least a bolt.

In one embodiment of the invention, in a stacked position the support frame(s) positioned above the lowermost support frame is releasable fixed to the support frame below, preferably by a split, such as a pin split, a spring split and/or a ring split.

In one embodiment of the invention, the one support frame positioned in the unfolded base is fixed or locked to the base frame, preferably by a bolt, and the remaining support frame(s) is releasable fixed to the base frame, preferably by a split, such as a pin split, a spring split and/or a ring split.

The embodiments is particularly, but not exclusively, advantageous for providing a system that is easy transformable between at least to positions.

In one embodiment of the invention, the at least two end section protrusions comprise at least one through hole, preferably two or more, for fixation or locking with the below or above positioned support frame when being in the stacked position, and/or for fixation or locking with the base frame bar when being in the unfolded position by insertion of the locking means through the hole(s).

The embodiment is particularly, but not exclusively, advantageous for providing a safe and reliable system and also at the same time being a system that is easily transformable.

In one embodiment of the invention, the two support frame end sections comprise an insert portion suitable for being received by a receiving portion of the above positioned support frame when being in a stacked position.

The embodiment is particularly, but not exclusively, advantageous for providing a stackable system.

In one embodiment of the invention, the insert portion comprises at least one through hole, preferably two or more, for fixation or locking with the above positioned support frame when being in a stacked position by insertion of the locking means through the hole.

In one embodiment of the invention, the locking means is/are provided:
- through the holes in the protrusions of end sections of a first support frame and through holes in the insert portion of a second support frame, when being in a stacked position, and/or
- through the holes in the protrusions of end sections of a support frame and through holes in the bars of the base frame, when being in a stacked position.

In one embodiment of the invention, the support frame comprises:
- at least three main beams said main beams running in a longitudinal direction and substantially defining the length of the support frame,

wherein the two main beams ends are respectively connected to the two end sections of the support frames, preferably connected by welding,
wherein at least one of the main beams define a top portion of the support frame, and
wherein at least one, preferably two, of the main beams define a bottom portion.

The embodiment is particularly, but not exclusively, advantageous for providing a system, wherein the supports frames are suitable for being in a stacked position, in an unfolded position and for providing an optimal mounting frame for solar panels.

In one embodiment of the invention, the support frame comprises:
- at least two stabilising beams running in a transverse direction, when seen from above,

wherein the two stabilising beam ends are respectively connected to two of the main beams, preferably connected by welding,
wherein at least the first stabilising beam is running in a first transverse direction and the second stabilising beam is running in a second transverse direction,
preferably the support frame comprises more than two stabilising beams, such as four, six, eight, ten or more.

The embodiment is particularly, but not exclusively, advantageous for providing support frames being suitable for changing the shape/design/configuration according to the need of the system, such as changing configuration according to the shape and size of the solar panels.

In one embodiment of the invention, the system comprises at least one solar panel mounted on the support frame, preferably a plurality of solar panels, more preferably six solar panels.

The embodiment is particularly, but not exclusively, advantageous for providing a frame system, wherein the system is immediately ready to provide solar energy when installed at the desired location.

In one embodiment of the invention, the base frame and or the support frame(s) are made of metal, preferably steel or aluminium, and preferably the support frame is being welded.

The embodiment is particularly, but not exclusively, advantageous for a reliable and robust system.

In one embodiment of the invention, the system comprises an electrical stand, said stand being releasable attachable to the frame system, preferably releasable attachable to the base frame.

In one embodiment of the invention, the system comprises a control panel.

Preferably, the system is an 8 Kilowatt solar system comprising an 8 Kilowatt inverter.

The system preferably also comprises one or more of:
- GPS,
- WIFI,
- tracker of production of watt, and/or
- a user interface solution, such as an app.

In one embodiment of the invention, the hight of four support frames stacked above each other on the base frame in a stacked position is 220 cm or less.

The embodiment is particularly, but not exclusively, advantageous for being positioned in a container.

In one embodiment of the invention, the system in a stacked position is positioned in a container.

The embodiment is particularly, but not exclusively, advantageous for being easily transported around the entire world.

In a second aspect, the invention further relates to a method for unfolding a frame system for solar panels, wherein said method transforms a frame system:
- from a stacked position for transporting the system, wherein support frames are stacked on top of each other on a base frame being folded,
- to an unfolded position for operation of the system, wherein the support frames are positioned beside each other on the base frame being unfolded,
said transformation comprises the steps of:
- unfolding by a joint, such as a hinge, at least two bars of the base frame, preferably unfolding more than two bars by a plurality of joints,
- unlocking support frames from each other, preferably by removing locking means,
- lifting an uppermost support frame from a stack of support frames, the stack comprising at least two support frames, preferably more than two support frames,
- positioning the lifted support frame on the unfolded base frame,
- repeating the unlocking, lifting and positioning steps if more than two support frames are comprised in the stack,
- positioning the unfolded base frame with positioned support frames by lifting the unfolded frame system,
wherein the steps of the method can be executed in any order and/or executed simultaneously.

The second aspect of the invention is particularly, but not exclusively, advantageous for providing a method for easy handling of the unfolding of a frame system and thereby providing mobility and easy installation of a solar energy system.
It is a huge advantage that the system can transform from a folded (transportable/stacked) system to an unfolded system completely ready and equipped for installation and thereby for producing and providing green energy to such as a construction site.

The unfolding of the base takes only a few minutes, thereby saving a huge amount of time compared to known methods and systems, wherein craftsmen would have to build the base from scratch taking hours or days.

When the base frame of the system has been unfolded and the support frames have been positioned on the unfolded base, the system is suitable for being positioned and installed at any desired location. It might be installed on the top of site accommodation / construction trailers, on a building, on the ground, etc.
It is suitable for being installed easily anywhere that might be preferred or required on the specific construction site.

Thereby, the method provides easy relocation of a green energy providing system, making the method specifically advantageous for performing on temporary locations, such as construction sites.

With the context of the invention "positioned support frames" might be as the support frames being arranged and/or apportioned and/or the like on the base frame.

In a third aspect, the invention further relates to a method for folding a frame system, wherein said method transforms the frame system:
- from an unfolded position for operation of the system, wherein the support frames are positioned beside each other on a base frame being unfolded,
- to a stacked position for transporting the system, wherein support frames are stacked on top of each other on the base frame being folded,
said transformation comprises the steps of:
- stacking the support frames on the unfolded base frame,
- locking support frames to each other, preferably by inserting locking means,
- folding by a joint, such as a hinge, at least two bars of the base frame, preferably folding more than to bars and by a plurality of joints, preferably folding the base frame into a shape substantially corresponding to the shape of the support frames,
- lifting the frame system being in a stacked position, preferably lifting the frame system onto a vehicle for transporting the frame system,
wherein the steps of the method can be executed in any order and/or executed simultaneously.

The third aspect of the invention is particularly, but not exclusively, advantageous for providing a method for easily handling the folding of a frame system and thereby providing mobility and easy un-installation of a solar energy system.

It is a huge advantage that the system can transform from an unfolded system to a folded system completely ready for transportation and relocation. The transportation can be on any desired vehicle, such as a truck.

The folding of the base takes only a few minutes, thereby saving a huge amount of time and saving a lot of material waste, since the base of the system is reusable unlike todays known system and methods, where the base is built from scratch and fitting precisely to only one specific location. The material of the base in known systems would today most likely be made of wood, and this base would after use be thrown away and thereby wasting a lot of material. The method thereby also provides material-saving advantages.

In one embodiment of the invention according to the methods of folding an unfolding,
- at least six bars are folded or unfolded by at least four joints of the base frame, and
- at least four support frames are comprised in the frame system and stacked on the folded base frame and/or positioned beside each other on the unfolded base frame.

In one embodiment of the invention according to the methods of folding and unfolding, the system and/or the support frames are lifted by a lifting means, such as a lifting strap, wherein the lifting means are fixed to at least one lifting portion of the support frame(s).

The embodiment is particularly, but not exclusively, advantageous for providing easy lifting and relocation.

The first, second and third aspect of the present invention may each be combined with any of the other aspects. These and other aspects of the invention will be apparent from and elucidated with reference to the embodiments described hereinafter.

Embodiments of the system/product should be seen as applicable to the method, and embodiments of the method should be seen as applicable for the product/system.

### DESCRIPTION OF THE DRAWING

Figure 1a-d illustrate from four angles a frame system in a stacked position.
Figure 2a-d illustrate from four angles a frame system with stacked support frames and an unfolded base frame.
Figure 3a-d illustrate from four angles a frame system with partly stacked support frames and an unfolded base frame.
Figure 4a-d illustrate from four angles a frame system with partly stacked support frames and an unfolded base frame.
Figure 5a-d illustrate from four angles a frame system in a completed unfolded position.
Figure 6a-d illustrate from four angles a support frame without solar panels.
Figure 6e illustrates an end section of a support frame.
Figure 7a-d illustrate from four angles a support frame with mounted solar panels.
Figure 8a-d illustrate from four angles a base frame in a folded position.
Figure 9a-d illustrate from four angles a base frame in an unfolded position.
Figure 10a-d illustrate an attachable electrical stand.
Figure 11a-e illustrate an alternative embodiment of the support frames having a quadrilateral cross-section.
Figure 12 illustrated several different alternative embodiments.

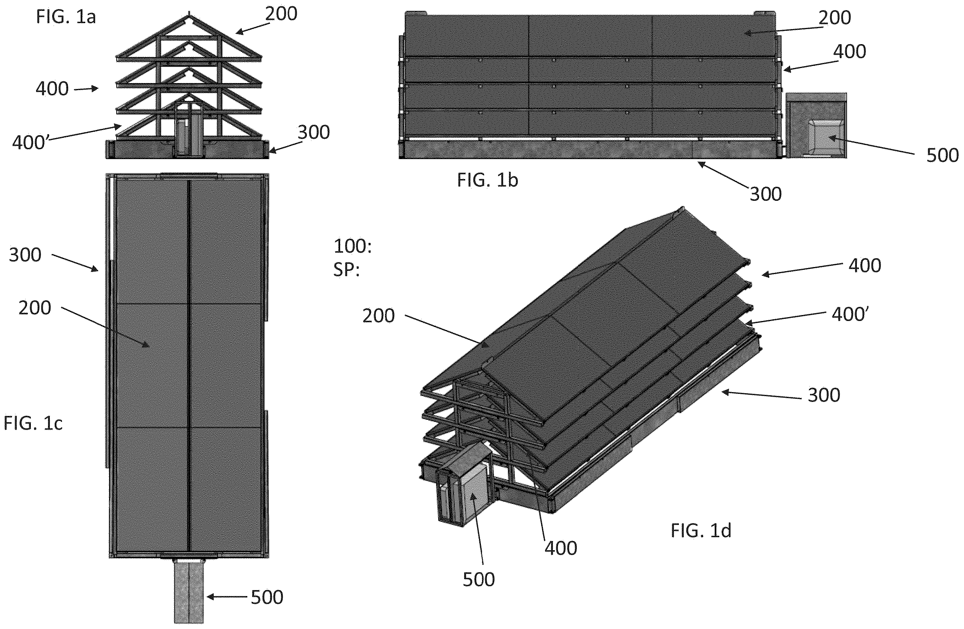

FIG 1-10a illustrate the frame system or a part of the system from the front
- a front angle.

FIG 1-10b illustrate the frame system or a part of the system from the side
- a side angle.

FIG 1-10c illustrate the frame system or a part of the system seen from above
- a top angle.

FIG 1-10d illustrate the frame system or a part of the system in a 3D perspective
- a 3D angle.

### DETAILED DESCRIPTION OF THE INVENTION

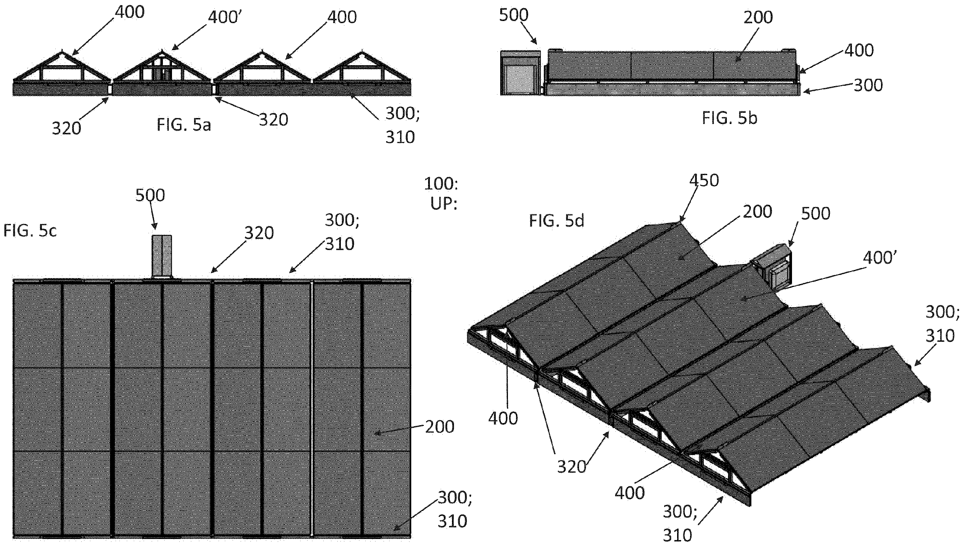

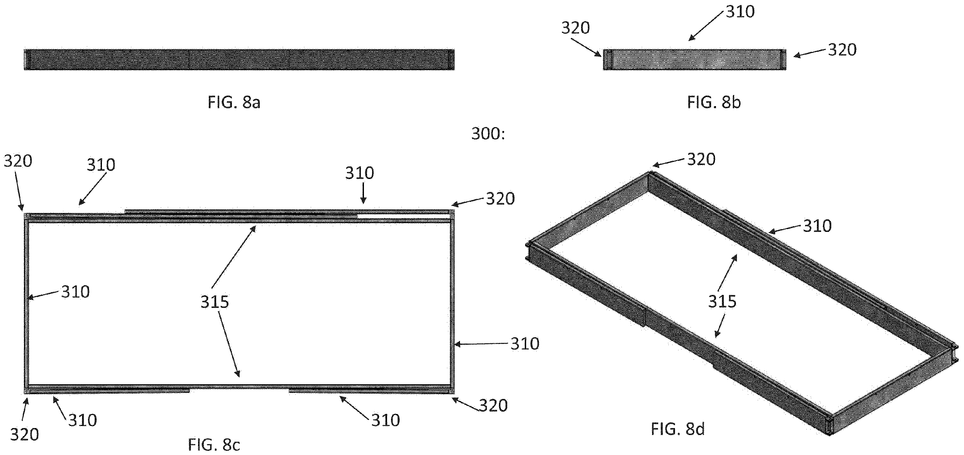

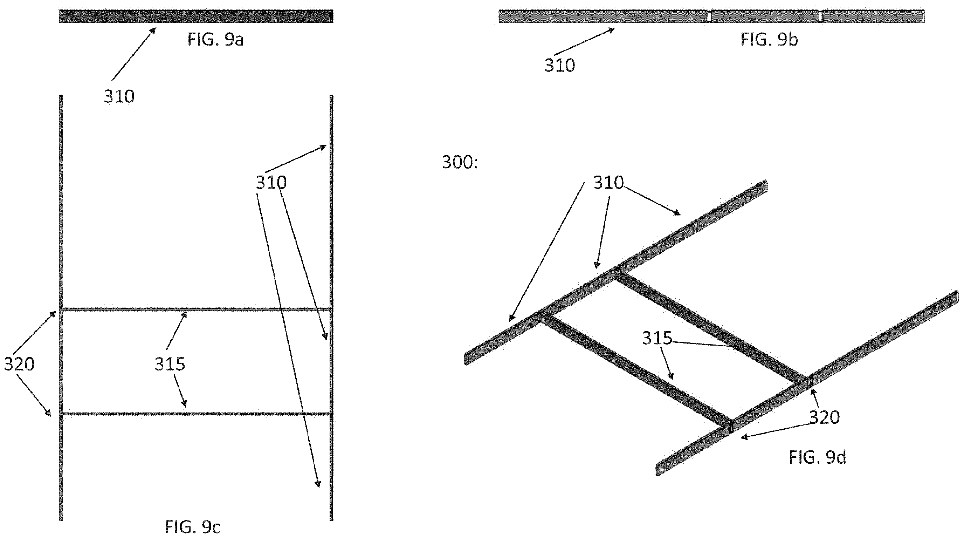

FIG 1a-d illustrate from four angles a frame system 100 in a stacked position SP. The illustrated frame system 100 for solar panels 200 comprises:
- a base frame 300, said base frame comprising:
   - at least four base bars 310, such as rods or beams, (see FIG. 8 and 9 for more detailed view on the base bars)
   - at least two movable base joints 320, such as hinges,
- at least two support frames 400, in FIG. 1 four support frames are illustrated, said support frames comprising:
   - two end sections 410,
   - at least two frame protrusions 420, said two protrusions being positioned respectively at the two end sections,
wherein the frame system 100 can take at least two positions:
- a stacked position SP for transporting the system, wherein the support frames 400 are stacked on top each other on a folded base frame 300, as illustrated in FIG. 1
- an unfolded position UP for operation of the system, wherein the support frames 400 are positioned beside each other on an unfolded base frame 300 (see FIG. 5).

Furthermore, FIG. 1 illustrates the frame system 100 wherein the support frame 400 positioned the lowermost in a stacked position is fixed to the base frame 300, preferably locked to the base frame, and preferably by at least a bolt (not shown), and/or wherein in a stacked position SP the support frame(s) 400 positioned above the lowermost support frame is releasable fixed to the support frame below, preferably by a split, such as a pin split, a spring split and/or a ring split (not shown).

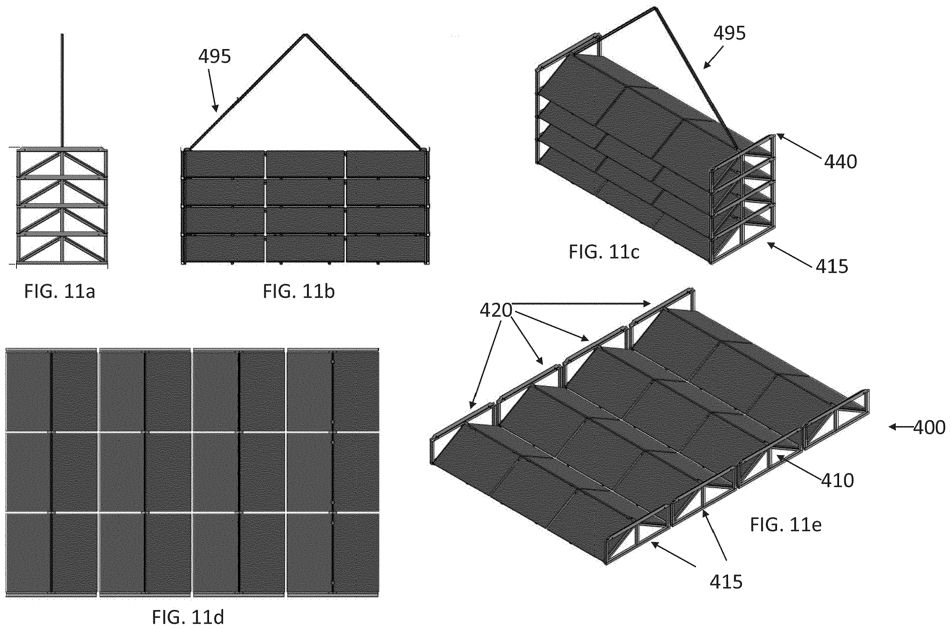

Also in FIG. 1, the end sections 410 of the support frames 400 have a substantially triangular cross-section when seen from the front (see FIG. 1a), preferably the end cross-section is symmetrical around a center line when seen from the front as illustrated.
Alternatively, the end section might be substantially quadrilateral as illustrated in FIG. 11.

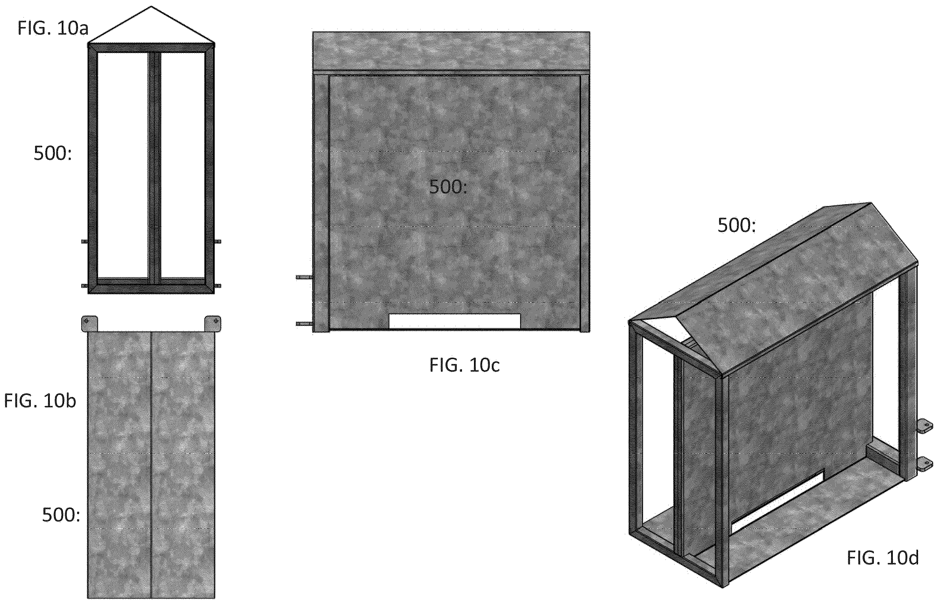

Moreover, in FIG 1a-d an attachable and detachable electric stand 500 is attached to the base frame. See further details of the electrical stand 500 in FIG. 10.

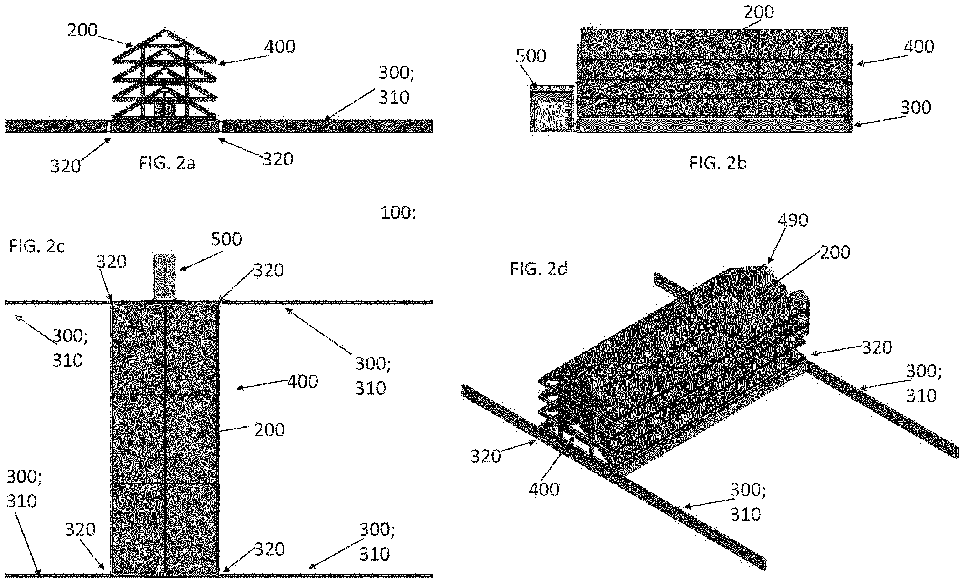

FIG 2a-d illustrate from four angles a frame system 100 with stacked support frames 400 and an unfolded base frame 300.
The base frame 300 can as illustrated be unfolded while the support frames 400 are still stacked upon. The unfolding of the base frame 300 is preferably performed while still being on the transportation provider, such as a vehicle, such as a truck.

In FIG. 2, the base frame 300 is unfolded with six base bars 310 and four joints 320. Furthermore, two transversely directed extra support base bars 315 are also illustrated, said extra support base bars 315 being positioned beneath the lowermost positioned support frame 400' (see FIG. 8 and 9 for more detailed view on the base bars).

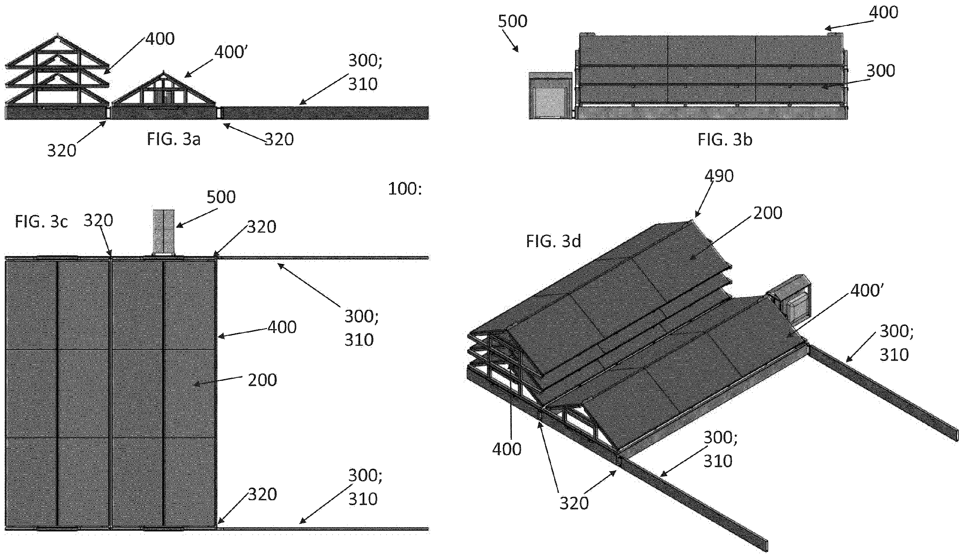

FIG 3a-d illustrate from four angles a frame system 100 with partly stacked support frames 400 and an unfolded base frame 300.
In FIG. 3, the base frame 300 is unfolded, and the stacked support frames 400 are started to be apportioned on the unfolded base frame 300. In FIG. 3, the stacked support frames 400 are released/unlocked/detached and moved from the original lowermost positioned support frame, preferably by removing a locking means, preferably by removing a split or a bolt (the removal is not shown). The rest of the stacked support frames 400 are repositioned on an empty spot along the unfolded base frame 300. The new lowermost positioned support frame is fixed / releasable locked to the base frame, preferably by a locking means, such as a split.

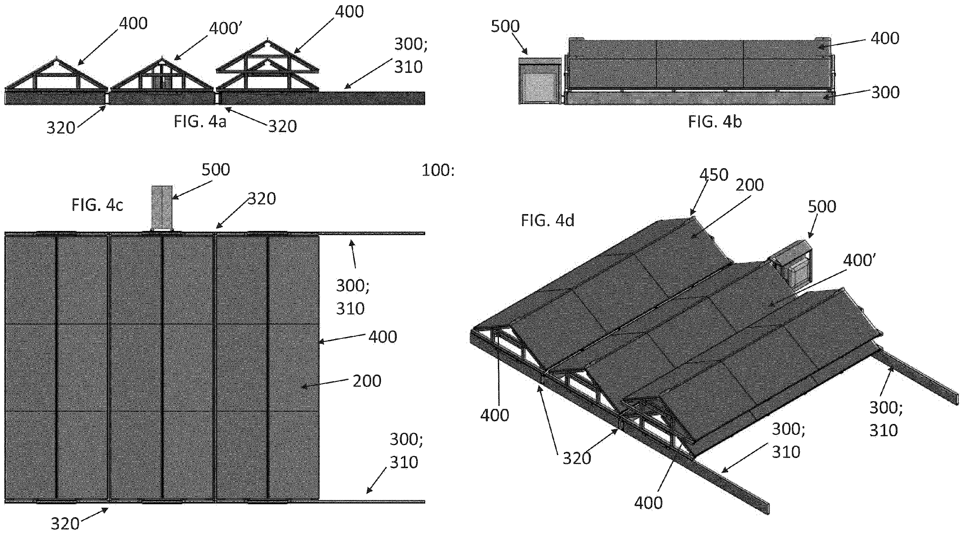

FIG 4a-d illustrate from four angles a frame system 100 with partly stacked support frames 400 and an unfolded base frame 300.
In FIG. 4, the base frame 300 is unfolded, and the stacked support frames 400 are being apportioned on the unfolded base frame 300. In FIG. 4, the stacked support frames 400 are released/unlocked/detached and moved from the original third lowermost positioned support frame, preferably by removing a locking means, preferably by removing a split or a bolt (the removal is not shown). The rest of the stacked support frames 400 are repositioned on an empty spot along the unfolded base frame 300. The new lowermost positioned support frame 400 is fixed / releasable locked to the base frame, preferably by a locking means, such as a split.

FIG 5a-d illustrate from four angles a frame system in a completed unfolded position UP.
The four support frames 400 illustrated in the system are not stacked upon each other but positioned / apportioned next to each other above the base frame 300.
Is should be understood that the four illustrated support frames 400 are only one embodiment of the invention. There could be one, two, three, five, six, seven, eight, or any desirable number of support frames 400. The base frame 300 would preferably be designed and shaped based on the number of support frames 400.
It should be understood that the positioning of support frames 400 on and along the unfolded base frame 300 can be performed both while still being on the transportation vehicle, such as a truck, and/or can be performed after the system has been removed from the transportation vehicle.

FIG. 5 furthermore illustrates a frame system 100, wherein one support frame 400', being the original lowermost positioned support frame 400', is fixed or locked to the base frame 300, preferably by a bolt (not shown), and the remaining support frame(s) 400 is releasable fixed to the base frame 300, preferably by a split, such as a pin split, a spring split and/or a ring split (not shown).
The base frame 300 being locked to the support frame 400' is preferably the original lowermost positioned support frame 400'. This support frame is preferably not moved or relocated from the base frame.

Looking through FIG. 1 to FIG. 5, it should be understood that these figures overall illustrate a method for unfolding a frame system 100 for solar panels 200, wherein said method transforms a frame system 100:
- from a stacked position SP for transporting the system, wherein support frames 400 are stacked on top of each other on a base frame 300 being folded,
- to an unfolded position UP for operation of the system, wherein the support frames 400 are positioned beside each other on the base frame 300 being unfolded,
said transformation comprises the steps of:
- unfolding by a joint 320, such as a hinge, at least two bars 310 of the base frame 300, preferably unfolding more than two bars 310 by a plurality of joints 320,
- unlocking support frames 400 from each other, preferably by removing locking means,
- lifting an uppermost support frame 400 from a stack of support frames, the stack comprising at least two support frames, preferably more than two support frames,
- positioning the lifted support frame 400 on the unfolded base frame 300,
- repeating the unlocking, lifting and positioning steps if more than two support frames 400 are comprised in the stack,
- positioning the unfolded base frame 300 with positioned support frames 400 by lifting the unfolded frame system,
wherein the steps of the method can be executed in any order and/or executed simultaneously.

Looking through FIG. 5 to FIG. 1, it should be understood that these figures overall illustrate a method for folding a frame system 100, wherein said method transforms the frame system:
- from an unfolded position UP for operation of the system 100, wherein the support frames 400 are positioned beside each other on a base frame 300 being unfolded,
- to a stacked position SP for transporting the system 100, wherein support frames 400 are stacked on top of each other on the base frame 300 being folded,
said transformation comprises the steps of:
- stacking the support frames 400 on the unfolded base frame 300,
- locking support frames 400 to each other, preferably by inserting locking means,
- folding by a joint 320, such as a hinge, at least two bars 310 of the base frame 300, preferably folding more than to bars and by a plurality of joints, preferably folding the base frame 300 into a shape substantially corresponding to the shape of the support frames 400, in the embodiment of the figures being rectangular,
- lifting the frame system 100 being in a stacked position SP, preferably lifting the frame system onto a vehicle for transporting the frame system,
wherein the steps of the method can be executed in any order and/or executed simultaneously.

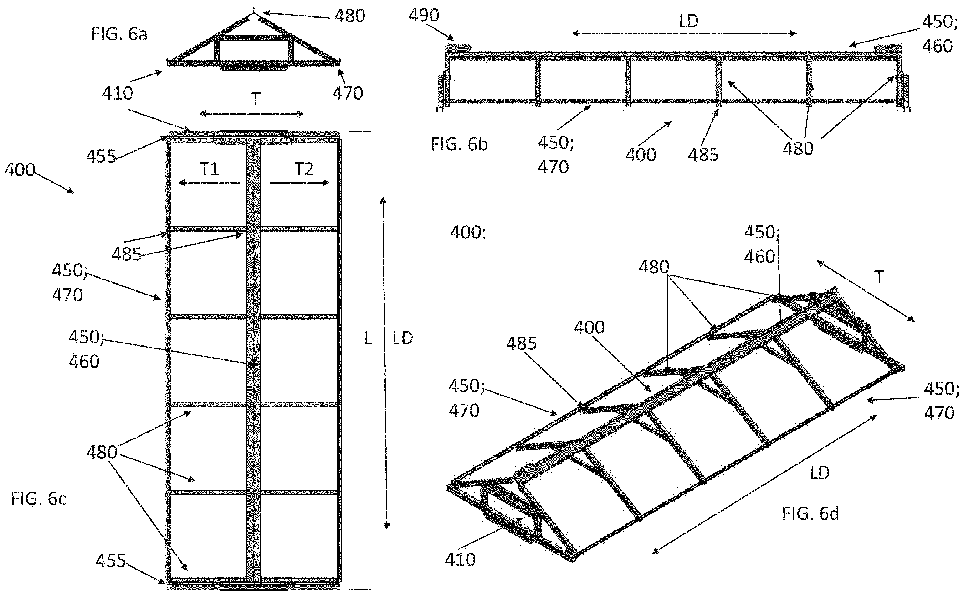

FIG 6a-d illustrate from four angles a support frame 400 without solar panels.

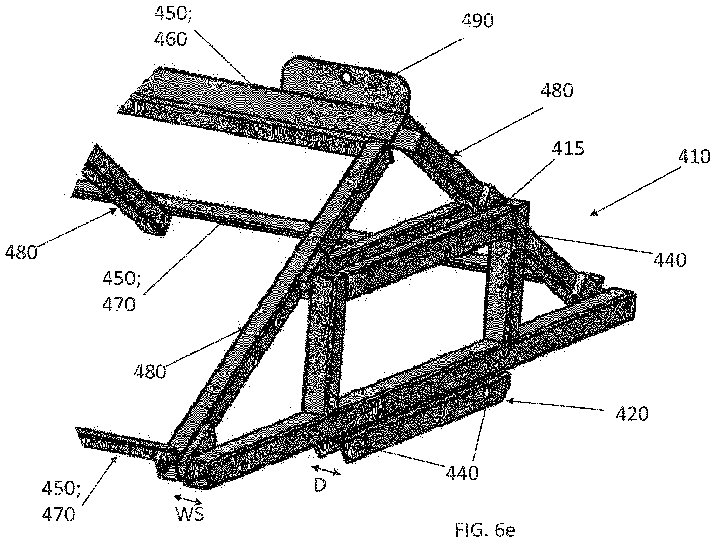

In FIG 6, the illustrated support frame comprises:
- at least three main beams 450 said main beams running in a longitudinal direction LD and substantially defining the length L of the support frame 400,

wherein the two main beams ends 455 are respectively connected to the two end sections 410 of the support frames 400, preferably connected by welding,
wherein at least one of the main beams 450 define a top portion 460 of the support frame 400, in FIG. 6 two main beams 450 define the top portion 460, and wherein at least one, preferably two, of the main beams 450defines a bottom portion 470.

Furthermore, FIG. 6 illustrates a support frame comprising:
- at least two stabilising beams 480 running in a transverse direction T when seen from above, such as FIG. 6c, in FIG. 6 there are twelve stabilising beams 480, wherein four of them also define a part of the two end sections 410.

wherein the two stabilising beam ends 485 are respectively connected to two of the main beams 450, preferably connected by welding,
wherein at least the first stabilising beam 450 is running in a first transverse direction T1 and the second stabilising beam 450 is running in a second transverse direction T2, when seen from above,
preferably the support frame 400 comprises more than two stabilising beams 450, such as four, six, eight, ten or more.

FIG 6e illustrates an end section of a support frame.
In FIG. 6e, the protrusions of the support frames are a receiving portion for receiving:
- an above or a below positioned support frame when being in a stacked positioned, and/or
- the base frame when being in an unfolded position.
The receiving portion is two protrusions positioned opposite each other, wherein the distance between the two protrusions corresponds substantially to the width of the base frame and/or the support frames.

Furthermore, FIG. 6e illustrates two support frame 400 end sections 410 comprising an insert portion 415 suitable for being received by a receiving portion 420 of the above positioned support frame when being in a stacked position SP. The receiving portion also being defined as end section protrusions 420. The end sections protrusion being illustrated as downward direction in FIG. 6e, however they might also be upwards directed as illustrated in FIG. 11.
Each support frame 400 comprises locking means, preferably at least four locking means, preferably splits and/or bolts and/or springs and/or gripping means (not shown).

It should be understood from FIG. 6e that the protrusions 420 of the support frames 400 are a receiving portion 420 for receiving:
- an above or a below positioned support frame 400 when being in a stacked positioned SP, and/or
- the base frame 300 when being in an unfolded position UP.

The two protrusions 420 are positioned opposite each other, wherein the distance between the two protrusions corresponds substantially to the width of the base frame and/or the width of support frames.

Moreover, FIG 6e illustrates an end section protrusion 420 comprising at least one through hole 440, preferably two or more, for fixation or locking with the below or above positioned support frame 400 when being in the stacked position SP, and/or for fixation or locking with the base frame 300 bar 310 when being in the unfolded position UP by insertion of the locking means through the hole(s) 440.

Also, FIG. 6e illustrates an end section 410 comprising an insert portion 415 suitable for being received by a receiving portion 420 of the above positioned support frame 400 when being in a stacked position SP, and preferably wherein the insert portion 415 comprises at least one through hole 440, preferably two or more, for fixation or locking with the above positioned support frame 400 when being in a stacked position SP by insertion of the locking means through the hole 400 (not shown).

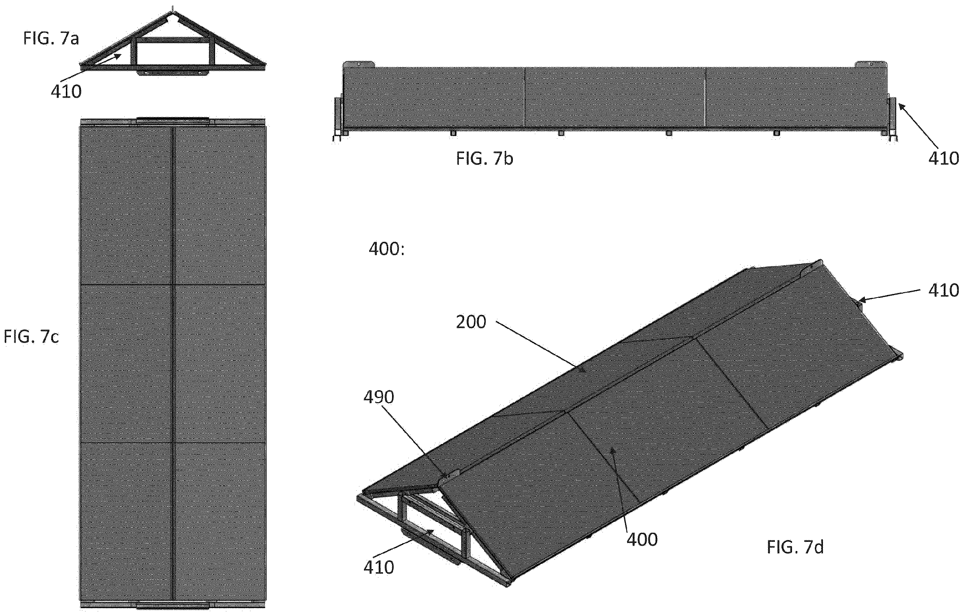

FIG 7a-d illustrate from four angles a support frame 400 with mounted solar panels 200.
Within the invention the system preferably comprises at least one solar panel 200 mounted on the support frame 400, preferably a plurality of solar panels 200, more preferably six solar panels as illustrated. However, is should be understood that the system might not comprise solar panels in some embodiments.

FIG 8a-d illustrate from four angles a base frame 300 in a folded position, corresponding to the stacked position SP of the system 100, but with no stacked support frames on.
When the base frame 300 is in a folded position is has substantially the same dimensions as one of the support frame(s) for being stacked or positioned above.

In FIG. 8, the base frame comprises six base bars 310 and four joints 320. Furthermore, two transversely directed extra support base bars 315 are also illustrated (see FIG. 9).

FIG 9a-d illustrate from four angles a base frame 300 in an unfolded position UP.
In FIG. 9, the base frame 300 comprises six base bars 310 and four joints 320. Furthermore, two transversely directed extra support base bars 315 are also illustrated. Said extra support base bars 315 are positioned beneath the lowermost positioned support frame 400' (not shown, see FIG. 1). The two extra support bars 315 are not (un)foldable, but fixed.

It should be understood that the extra bars 315 are only a preferred embodiment, thereby the base frame 300 does not necessarily have to comprise these extra support bars 315.
Also, it should be understood that the illustrated specific embodiment of the base frame 300 is not a limitation to the invention, the base frame 300 might take a number of other embodiments.

FIG 10a-d illustrate an attachable electrical stand 500.
The electrical stand 500 can be designed in any desired shape. The electrical stand 500 is preferably attachable and detachable to the base frame 300 or to a support frame 400, preferably via bolt or the like. Alternatively, the electrical stand 500 might be welded to the system 100.

Figure 11a-e illustrate an alternative embodiment of the support frames 400 having a quadrilateral cross-section.
The two support frame end sections 4101 have a substantially quadrilateral cross-section, and the at least two end section protrusions 420 comprise a receiving portion 420 positioned upwards from the uppermost section of the end section 410 for receiving the above positioned support frame 400 when being stacked.
Furthermore, the system and/or the support frames 400 are lifted by a lifting means 495, such as a lifting strap, wherein the lifting means are fixed to at least one lifting portion 490 of the support frame(s) 400.

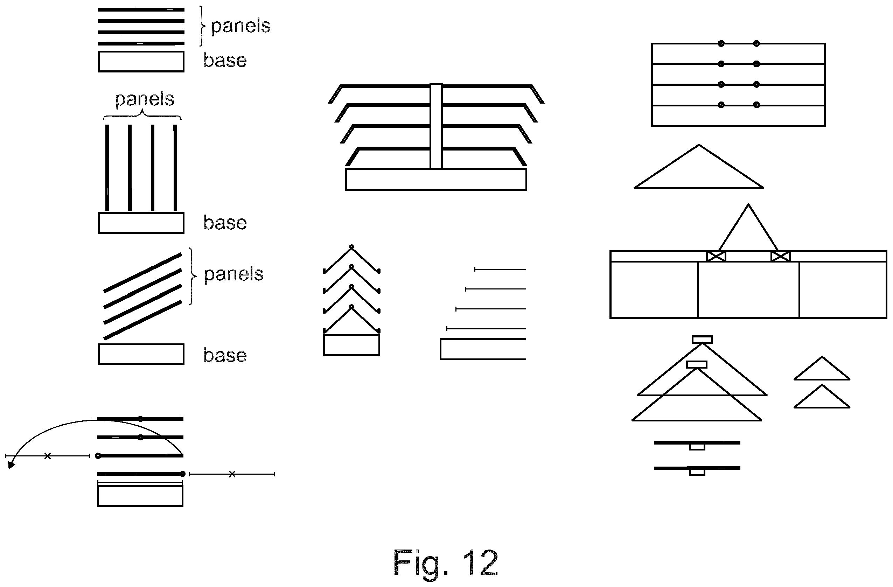

Figure 12 illustrates several different alternative embodiments.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is not possible and advantageous.

## Claims

1. A **frame system** (100) for solar panels (200), said frame system comprising:
- a base frame (300), said base frame comprising:
- at least four base bars (310), such as rods or beams,
- at least two movable base joints (320), such as hinges,
- at least two support frames (400), said support frames comprising:
- two end sections (410),
- at least two frame protrusions (420), said two protrusions being positioned respectively at the two end sections,
wherein the frame system (100) can take at least two positions:
- a stacked position (SP) for transporting the system, wherein the support frames (400) are stacked on top of each other on a folded base frame (300),
- an unfolded position (UP) for operation of the system, wherein the support frames (400) are positioned beside each other on an unfolded base frame (300).

2. A frame system (100) according to claim 1, wherein the system comprises:
- at least six base bars (310),
- at least four moving joints (320), and
- at least four support frames (400).

3. A frame system (100) according to any of the preceding claims, wherein the protrusions (420) of the support frames (400) are a receiving portion (420) for receiving:
- an above or a below positioned support frame (400) when being in a stacked positioned (SP), and/or
- the base frame (300) when being in an unfolded position (UP).

4. A frame system (100) according to any of the preceding claims, wherein the two protrusions (420) are positioned opposite each other, wherein the distance between the two protrusions corresponds substantially to the width (WB) of the base frame and/or the width of support frames (WS).

5. A frame system (100) according to any of the preceding claims, wherein the two support frame end sections (410) comprise an insert portion (415) suitable for being received by a receiving portion (420) of the above positioned support frame (400) when being in a stacked position (SP).

6. A frame system (100) according to any of the preceding claims, wherein each support frame (400) comprises locking means (430), preferably at least four locking means, and/or preferably splits, bolts, springs and/or gripping means.

7. A frame system (100) according to any of the preceding claims,
wherein the support frame (400) positioned the lowermost in a stacked position (SP) is fixed to the base frame (300), preferably locked to the base frame, and preferably by at least a bolt, and/or

8. wherein in a stacked position the support frame(s) positioned above the lowermost support frame is releasable fixed to the support frame below, preferably by locking means (430), such as a split, springs and/or gripping means.

9. A frame system (100) according to any of the preceding claims, wherein one support frame (400') positioned on the unfolded base is fixed or locked to the base frame, preferably by a bolt, and the remaining support frame(s) (400) is releasable fixed to the base frame, preferably by a split, such as a pin split, a spring split and/or a ring split.

10. A frame system (100) according to any of the preceding claims, wherein the at least two end section protrusions (420) of the support frame (400) comprise at least one through hole (440), preferably two or more, for fixation or locking with the below or above positioned support frame (400) when being in the stacked position (SP), and/or for fixation or locking with the base frame bar (310) when being in the unfolded position (UP) by insertion of the locking means (430) through the hole(s) (440).

11. A frame system (100) according to any of the preceding claims, wherein the two support frame end sections (410) comprise an insert portion (415) suitable for being received by a receiving portion (420) of the above positioned support frame when being in a stacked position (SP), and preferably wherein the insert portion (415) comprises at least one through hole (440), preferably two or more, for fixation or locking with the above positioned support frame (400) when being in a stacked position by insertion of the locking means (430) through the hole.

12. A frame system (100) according to any of the preceding claims, wherein locking means (430) are provided:
- through the holes (440) in the protrusions (420) of the end sections (410) of a first support frame (400) and through holes (440) in the insert portion (415) of a second support frame (400), when being in a stacked position (SP), and/or
- through the holes (440) in the protrusions (420) of the end sections (410) of a support frame (400) and through holes (340) in the bars (310) of the base frame (300), when being in an unfolded position (UP) and/or in a stacked position (SP) and/or.

13. A frame system (100) according to any of the preceding claims, wherein the support frame (400) comprises:
- at least three main beams (450) said main beams running in a longitudinal direction (L) and substantially defining the length of the support frame,
wherein the two main beams ends (455) are respectively connected to the two end sections (410) of the support frames, preferably connected by welding,
wherein at least one of the main beams (450) define a top portion (460) of the support frame, and
wherein at least one, preferably two, of the main beams define a bottom portion (470).

14. A frame system (100) according to any of the preceding claims, wherein the support frame (400) comprises:
- at least two stabilising beams (480) running in a transverse direction (T) when seen from above,
wherein the two stabilising beam ends (485) are respectively connected to two of the main beams (450), preferably connected by welding,
wherein at least the first stabilising beam (480) is running in a first transverse direction (T1) and the second stabilising beam is running in a second transverse direction (T2), preferably the support frame comprises more than two stabilising beams, such as four, six, eight, ten or more.

15. A frame system (100) according to any of the preceding claims, wherein the frame system comprises at least one solar panel (200) mounted on the support frame (400), preferably a plurality of solar panels, more preferably six solar panels.

16. A method for unfolding a frame system (100) for solar panels (200), preferably a frame system according to claim 1-14, wherein said method transforms a frame system:
- from a stacked position (SP) preferably for transporting or storing the system, wherein support frames (400) are stacked on top of each other on a base frame (300) being folded,
- to an unfolded position (UP) preferably for operation of the system, wherein the support frames (400) are positioned beside each other on the base frame (300) being unfolded,
said transformation comprises the steps of:
- unfolding by a joint (420), such as a hinge, at least two bars (410) of the base frame, preferably unfolding more than to bars by a plurality of joints,
- unlocking support frames from each other, preferably by removing locking means (430),
- lifting an uppermost support frame (400) from a stack of support frames, the stack comprising at least two support frames, preferably more than two support frames,
- positioning the lifted support frame (400) on the unfolded base frame (300),
- repeating the unlocking, lifting and positioning steps if more than two support frames (400) are comprised in the stack,
- positioning the unfolded base frame (300) with positioned support frames (400) by lifting the unfolded frame system,
wherein the steps of the method can be executed in any order and/or executed simultaneously.

17. A method for folding a frame system (100) for solar panels, preferably a frame system according to claim 1-14, wherein said method transforms the frame system:
- from an unfolded position (UP) preferably for operation of the system, wherein the support frames (400) are positioned beside each other on a base frame (300) being unfolded,
- to a stacked position (SP) preferably for transporting the system, wherein support frames (400) are stacked on top of each other on the base frame (300) being folded,
said transformation comprises the steps of:
- stacking the support frames (400) on the unfolded base frame (300),
- locking support frames (400) to each other, preferably by inserting locking means (430),
- folding via a joint (320), such as a hinge, at least two bars (310) of the base frame (300), preferably folding more than to bars and by a plurality of joints, preferably folding the base frame (300) into a shape substantially corresponding to the shape of the support frames (400),
- lifting the frame system (100) being in a stacked position (SP), preferably lifting the frame system onto a vehicle for transporting the frame system,
wherein the steps of the method can be executed in any order and/or executed simultaneously.
